# EUROPEAN PATENT SPECIFICATION

(11) **EP 0 712 552 B1**
(45) Date of publication and mention of the grant of the patent: **30.10.2002**
(21) Application number: 94923004.9
(22) Date of filing: 04.08.1994
(51) Int. Cl.: H04J 14/02

(54) **OPTICAL FIBRE COMMUNICATIONS SYSTEM**
LICHTWELLENLEITERÜBERTRAGUNGSSYSTEM
SYSTEME DE TELECOMMUNICATIONS A FIBRES OPTIQUES

(30) Priority: 04.08.1993 EP 93306146
(43) Date of publication of application: 22.05.1996
(73) Proprietor: BRITISH TELECOMMUNICATIONS public limited company, London EC1A 7AJ (GB)
(72) Inventor: STALLEY, Kevin, Derek, Suffolk IP12 3RT (GB); CLARKE, Donald, Eric, Arthur, Essex CO1 1EY (GB); ROSHER, Paul, Adrian, Suffolk IP5 7YH (GB)
(74) Representative: Lloyd, Barry George William
(86) International application number: PCT/GB94/01713
(87) International publication number: WO 95/005041

(56) References cited:
- EP-A- 0 380 945
- EP-A- 0 386 466
- WO-A-91/09478
- JOURNAL OF LIGHTWAVE TECHNOLOGY, vol.11, no.1, 1 January 1993, NEW YORK US pages 60 - 68, XP377986 ROBERT OLSHANSKY ET AL. 'Subcarrier multiplexed broadband service network: A flexible platform for broadband subscriber services.'
- JOURNAL OF LIGHTWAVE TECHNOLOGY, vol.11, no.1, 1 January 1993, NEW YORK US pages 106 - 115, XP377990 TOSHIYUKI TSUCHYA ET AL. 'Analysis and design for optical video transport/distribution system with video on demand service.'
- REVUE HF, vol.XIV, no.7/8, 1990, OPHAIN BE pages 194 - 210, XP208851 D. MESTDAGH ET AL. 'Broadband passive optical access networks'

## Description

This invention relates to an optical fibre communications system, and in particular to an optical fibre communications system capable of carrying both broadband signals and interactive signals such as telephony and ISDN.

In optical transmission systems, the radiation used is not necessarily in the visible region of the electromagnetic spectrum, and so the words "optical" and "light" when used in this specification are not to be interpreted as implying any limitation to the visible spectrum. For example, the wavelengths preferred for transmission through silica optical fibres are in the infra red region of the spectrum, because the low loss minima of silica fibres occur at about 1.3 and 1.5 microns.

Optical transmission systems may be utilised to distribute both interactive services such as telephony and ISDN, and broadband services such as video channels, video telephony and information services such as picture videotext. In general, the primary service, at least as presently measured in terms of subscriber lines, is telephony. Increasingly, however, there is a perceived need for optical transmission systems to be able to carry both interactive services and broadband services.

Various techniques are available for separating different services for transmission over the same lines, for example the transmitted signals may be time, wavelength or sub-carrier frequency multiplexed. Wavelength division multiplexing, with different services on different wavelengths, would require additional optical transmitters and receivers to be installed wherever an expansion of services and additional channels is required.

Conventional broadband service provision, for example that provided by the cable TV companies, uses amplitude modulated (AM) transmission. Unfortunately, AM transmission is not suitable for passive optical networks (PONs), due to signal-to-noise-ratio limitations and intermodulation distortion imposed by optical transmitters. Although lasers are being developed which offer the prospect of meeting the required performance in these two areas, the optical budget achievable will still be very limited, and optical splitting of the signal will, therefore, be minimal.

Known broadband optical fibre communications systems are described in EP-A-0386466, EP-A-0380945 Journal of Lightwave Technology, vol. 11, no. 1, January 1993, New York US; pages 60-68 (Olshanky et al), and Journal of Lightwave Technology, vol. 11, no. 1, January 1993, New York US; pages 106-115 (Tsuchiya et al).

The problem addressed by the present invention can be seen as devising a more efficient, versatile headend/customer optical fibre communications system with respect to the systems known from the cited documents, this problem being solved by multiplexing the interactive and broadband signals at the customer transmitter and using TDMA for upstream transmission to obtain a more efficient processing of the control signals.

In the above-cited article by Olshansky et al. in Journal of Lightwave Technology, the control signals are transmitted separately upstream. The system processes the narrow band (for the interactive signals) and broadband signals in the upstream direction strictly independently from each another. Instead of the use of TDMA for the upstream transmission, the document explicitly advocates the use of the most simple technologies, such as Ethernet multiple-access protocol on a low-speed baseband channel, to carry the control packets to the headend.

It must also be stressed that the system of the present invention differs fundamentally from that disclosed in the article by Olshansky in that, according to the present invention, each customer has their own optical network unit.

Likewise, EP-A-0 386 466 does not disclose a system wherein each customer has an optical network unit. Rather, this document intends that optical network units be installed for each group of customers living in each group of semidetached or row of terraced houses ("Mehrfamilienhaus") and discloses customer communities ("Teilnehmergemeinschaften"), wherein each customer in each customer group has his own dedicated frequency. However, only one optical network unit is provided for each community. In particular, this document explicitly teaches away from using TDM because the switching requirements make it too expensive.

It is also acknowledged that TPON BTS units are known in the art. However, they are not disclosed in combination with the other features of the invention. In particular, none of the known documents disclose multiplexing interactive and broadband signals at the customer transmitter and using TDMA for upstream transmission to obtain a more efficient processing of the control signals.

The present invention provides an optical fibre communications system comprising a head end connected to a plurality of customers by an optical fibre network, the head end comprising a transmitter unit and a receiver unit, and each of the customers having an optical network unit comprising an optical receiver and a transmitter unit, the head end transmitter and receiver units being connected respectively to the receivers and the transmitter units of the customer optical network units by at least one passive optical network, said at least one passive optical network constituting the optical fibre network, wherein the head end transmitter unit is constituted by a sub-carrier multiplexer arranged to drive an optical transmitter, the sub-carrier multiplexer having a plurality of input sub-carriers at different frequencies, a further transmitter unit being arranged to provide one of said sub-carriers carrying time division multiplexed interactive signals and the remaining sub carriers being provided, in use, to carry broadband service signals, wherein each customer transmitter unit includes an optical transmitter and means for multiplexing interactive signals and control signals to drive said optical transmitter unit, and wherein the head end includes a system control unit for controlling the transmission of broadband services by the head end transmitter unit in dependence upon the control signals received by the head end receiver unit from the customer transmitter units, and wherein upstream transmission is by time division multiple access at baseband.

Advantageously, the head end optical transmitter is arranged to operate at a first predetermined wavelength, and each of the customer optical transmitters is arranged to operate at a second predetermined wavelength. Preferably, the first predetermined wavelength lies in the range of from 1500nm to 1650nm, and the second predetermined wavelength lies in the range from 1260nm to 1360nm.

In a preferred embodiment, said at least one passive optical network is constituted by separate first and second simplex passive optical networks, each having an n-way split, the first simplex passive optical network connecting the head end transmitter unit to the receivers of the customer optical network units, and the second simplex passive optical network connecting the head end receiver unit to the transmitter units of the customer optical network units. Alternatively, said at least one passive optical network may be constituted by a duplex passive optical network having an n-way split. In this case, the head end transmitter unit and the head end receiver unit are connected to the duplex passive optical network via a wavelength division multiplexer (WDM), and the receiver and transmitter unit of each customer are connected to the duplex passive optical network via a respective WDM.

Preferably, the system further comprises a video server for supplying video film signal information to the sub-carriers carrying broadband service signals. In this case, the system may further comprise a switch for controlling the supply of video film signal information from the video server to the sub-carriers carrying broadband service signals. Advantageously, the system further comprises a broadcast distribution network for supplying broadcast television channels to the sub-carriers carrying broadband service signals via said switch. Preferably, the broadcast distribution network and the video server are connected to the switch by an SDH ring.

Conveniently, a respective receiver/tuner unit is associated with the receiver of each of the customer optical network units, the receiver/tuner units being arranged to convert received video film signal information into a form suitable for reception by a television apparatus.

Advantageously, the interactive signals are digitally phase modulated onto said one sub-carrier. Preferably, the broadband service signals are frequency modulated onto said remaining sub-carriers. Alternatively, the broadband service signals are digitally phase modulated onto said remaining sub-carriers. In either case, quadrature phase shift keying (QPSK) may be used for digitally phase modulating signals onto said sub-carrierls).

In a preferred embodiment, the further transmitter unit is a TPON head-end transmitter. Advantageously, the TPON head-end transmitter is a Bit Transport System transmitter, and preferably the Bit Transport System transmitter bit interleaves a plurality of traffic data streams.

Two forms of optical fibre communications system, each of which is constructed in accordance with the invention, will now be described, by way of example, with reference to the accompanying drawings, in which:-
Figure 1 is a schematic representation of the first system;
Figure 2 is a schematic representation of the second system; and
Figure 3 is a schematic representation of the head end of a modified form of either of the systems of Figures 1 and 2.

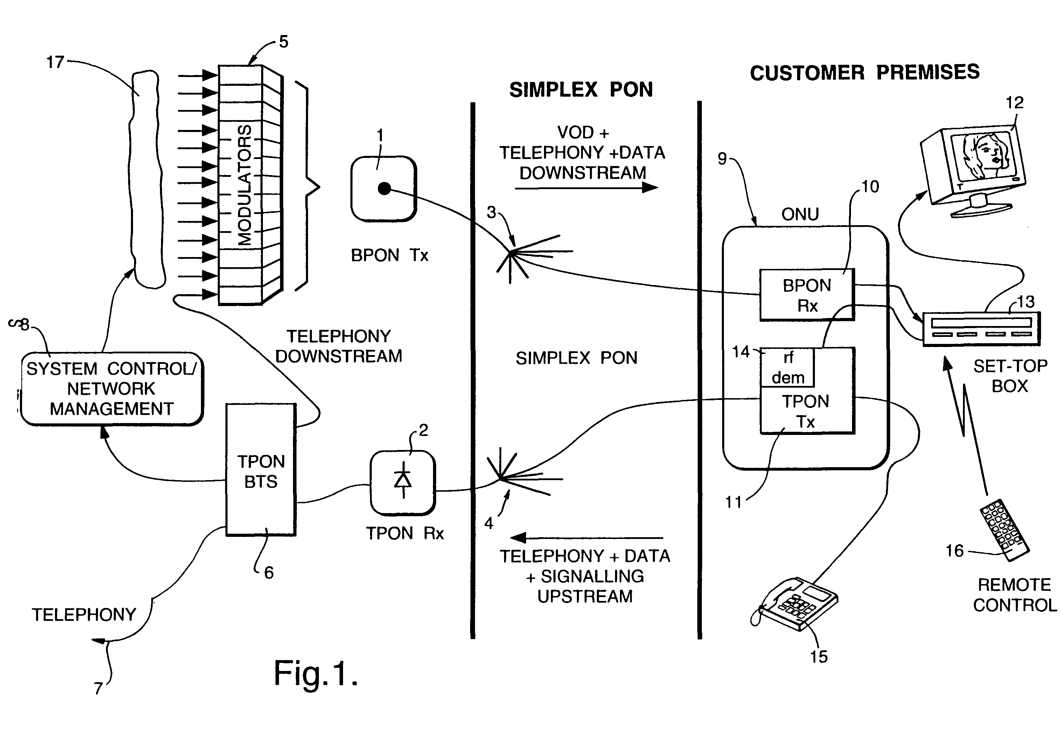

Referring to the drawings, Figure 1 shows a TPON/BPON optical fibre communications system having a head end station including a BPON transmitter 1 and a TPON receiver 2. The transmitter 1 is connected to 256 customer premises (only one of which is shown) via a simplex PON indicated generally by the reference numeral 3. Similarly, the TPON receiver 2 is connected to the 256 customer premises by a simplex PON indicated generally by the reference numeral 4. The BPON transmitter 1 is basically a laser provided with control/monitoring circuitry. If necessary, an optical amplifier (such as a fibre amplifier) will be provided downstream of this laser. A suitable BPON transmitter is that described in the article "Broadband systems on passive optical networks" (British Telecom Technology Journal, vol 7, no. 2, pages 115-122, April 1989). The TPON receiver 2 is a standard TPON optical receiver, for example of the type described in the article "The provision of telephony over passive optical networks" (British Telecom Technology Journal, vol 7, no. 2, pages 100-114, April 1989).

The BPON transmitter 1 is driven by an FM sub-carrier multiplexer 5 which has 32 input sub-carriers each of up to 40Mbit/s capacity. This technique of sub-carrier multiplexing enables transmission of a multiplex of the 32 sub-carriers on an optical wavelength, here chosen to be 1550nm. The sub-carriers have frequencies ranging from 950MHz up to 2GHz, with the carriers being separated by 27MHz. Each of 31 of the carriers can be either frequency modulated or digitally phase modulated. When frequency modulated, only a single analogue video channel is conveyed on each of the 31 carriers. Each carrier can also be digitally phase modulated using QPSK of up to a bit rate of 40Mbit/s, and so, as each video channel can be compressed to about 2Mbit/s, each of the 31 carriers can support between 16 and 18 compressed video channels whereby the complete multiplex can support 558 channels. The remaining sub-carrier carries signals from a TPON head end 6 which provides interactive services such as telephony, ISDN, fax etc. The TPON head end 6 may be a TPON Bit Transport System (BTS) of the type described in the above-mentioned article "The provision of telephony over passive optical network".

The TPON head end 6 is connected to the main telephony network as indicated by the arrow 7. The entire head end constituted by the BPON transmitter 1, the TPON receiver 2, the sub-carrier multiplexer 5 and the TPON head end 6 are controlled by a control/network management system indicated generally be the reference numeral 8.

Each of the customer premises includes an optical network unit (ONU) 9 which comprises a BPON receiver 10 and a TPON sub-system unit 11. The video channel information output by the receiver 10 is fed to a television 12 via a control box 13 (similar to the set-top receiver used to tune satellite TV signals). The BPON receiver 10 is an avalanche photodiode (APD) of the type described in the above-mentioned article "Broadband systems on passive optical networks". The TPON sub-system unit 11 is a standard BTS network termination unit of the type described in the above-mentioned article "The provision of telephony over passive optical networks". This unit 11 includes an optical transmitter (such as a Fabry-Perot laser) for transmitting video request signals, telephony and other interactive service signals at a wavelength of 1300nm using a time division multiple access (TDMA) transmission technique. The unit 11 also includes an optical receiver and an RF amplifier circuit for driving the control box 13.

The TPON sub-system unit 11 includes a demodulator 14 for providing downstream TDM TPON signals to the TPON sub-system unit 11. The TDM signals are then demultiplexed to drive customer premises equipment (CPE) such as a telephone 15. Outgoing (upstream) telephony from the telephone 15 is multiplexed by the TPON sub-system unit 11 for TDMA transmission via the PON 4 to the TPON receiver 2 at the head end. Upstream video request signalling from the customer is passed from the control box 13 to the TPON sub-system unit 11, and then back to the head end via the PON 4 and the TPON receiver 2. The control box 13 can be controlled via an infra red remote control unit 16.

The BTS of the TPON head end 6 receives speech and data channels which arrive on the line 7 as part of a 2 Mbit/s PCM stream with signalling. Within the TPON head end 6, the statistically-multiplexed signalling for 30 64 kbit/s speech and data channels is converted to a form which can be delivered to individual ONUs 9. The signalling for each speech and data channel, formatted into 8 kbit/s channels, is used, for example, to control ringing and to provide loop disconnect detection. Each 64 kbit/s speech and data channel, and its associated 8 kbit/s signalling channel, is then multiplexed with the other 29 channels to form a 2.16 Mbit/s (=30x(64+8) kbit/s) signal which, together with some spare bits, forms a 2.352 Mbit/s interface to the TPON head end 6. The combination of speech and data signals and the associated signalling is referred to as traffic data. The function of the TPON head end 6 is to transport this traffic data transparently to the ONUs 9 and vice-versa. Within the TPON head end 6, the 2.352 Mbit/s stream is bit interleaved with similar streams derived from seven other PCM streams, giving a total bit rate of 18.816 Mbit/s which, when control overheads are added, becomes 20.48 Mbit/s on the PON 3.

The PON 3 intrinsically ensures that all of the 20.48 Mbit/s stream is received at all of the ONUs 9. Each particular ONU 9 can be instructed by the TPON head end 6 to select its traffic, starting anywhere in the multiplex, and to extract a given number of 8 kbit/s channels that were contiguous in the original 2.352 Mbit/s streams. In the case of a speech channel, an ONU 9 selects nine 8 kbit/s channels, 64 kbit/s for speech and 8 kbit/s for the associated signalling. The ONU 9 then converts these to a form for connection to the telephone 15.

In the reverse direction, a reciprocal process occurs; the (64+8) kbit/s traffic data derived from the telephone 15 plus control signals are transmitted onto the PON 4 by bit interleaving with other ONUs 9. The bits are actually interleaved by the PON 4 and, at the TPON head end 6, they appear as a continuous and perfectly interleaved stream. The ranging mechanism which ensures that this happens is controlled by the TPON head end 6 using the control signals in the 20.48 Mbit/s multiplex. The BTS is described in greater detail in our European patent specifications 318331, 318332, 318333, 318335, 502004 and 512008.

In use, the head end broadcasts all the information on all 32 sub-carriers to all of the associated 256 customers via the PON 3. As mentioned above, 31 of the sub-carriers carry video channels, telephony and other interactive services being provided on the remaining sub-carrier dedicated for such services.

The video channels carried by the remaining 31 sub-carriers are provided by a video server 17. The arrangement is such that the network can transmit up to 560 video channels simultaneously (assuming each video channel is compressed to 2Mbit/s, and each sub-carrier carries 18 video channels). If a given subscriber wants to view a particular video film, the necessary request is sent to the head end by that customer's control box 13 (possibly using the remote control unit 16), the associated TPON sub-system unit 11 and the PON 4. The signalling information is received by the TPON receiver 2, and is passed on to the video server 17 via the TPON head end 6 and the control system 8. The video server 17 then transmits the requested video film on to a spare video channel for transmission to that customer together with a control signal which enables that customer's control box 13 to receive that video channel.

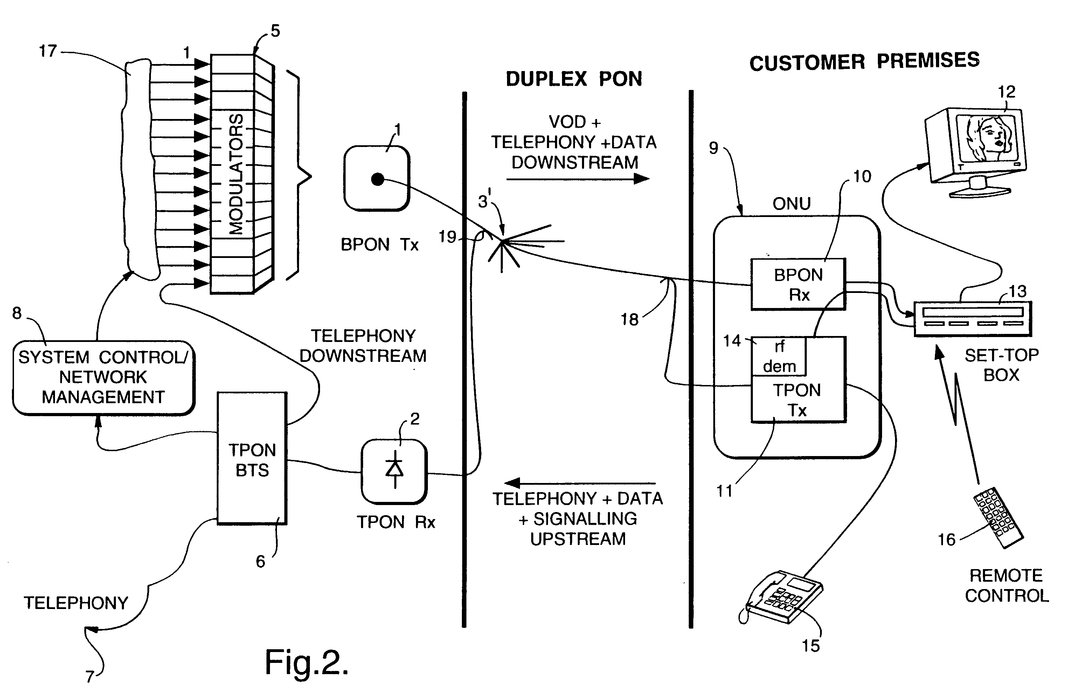

Figure 2 shows a modified form of the system shown in Figure 1, in which the two simplex PONs 3 and 4 are replaced by a duplex PON 3'. Accordingly, like reference numerals will be used for like parts, and only the modifications will be described in detail. In this embodiment, all the downstream signalling takes place in exactly the same manner as for the embodiment of Figure 1, that is to say the head end broadcasts all the information on all 32 sub-carriers to all of the associated 256 customers via the BPON transmitter 1 and the PON 3'. Upstream signalling is, however, also carried on the PON 3', with the TPON sub-system unit 11 of each customer being connected to its associated fibre via a WDM 18. Similarly, the TPON receiver 2 is connected to the PON 3' via a WDM 19 upstream of the first splitting point. As before, downstream signalling is at 1550nm, and upstream signalling at 1300nm.

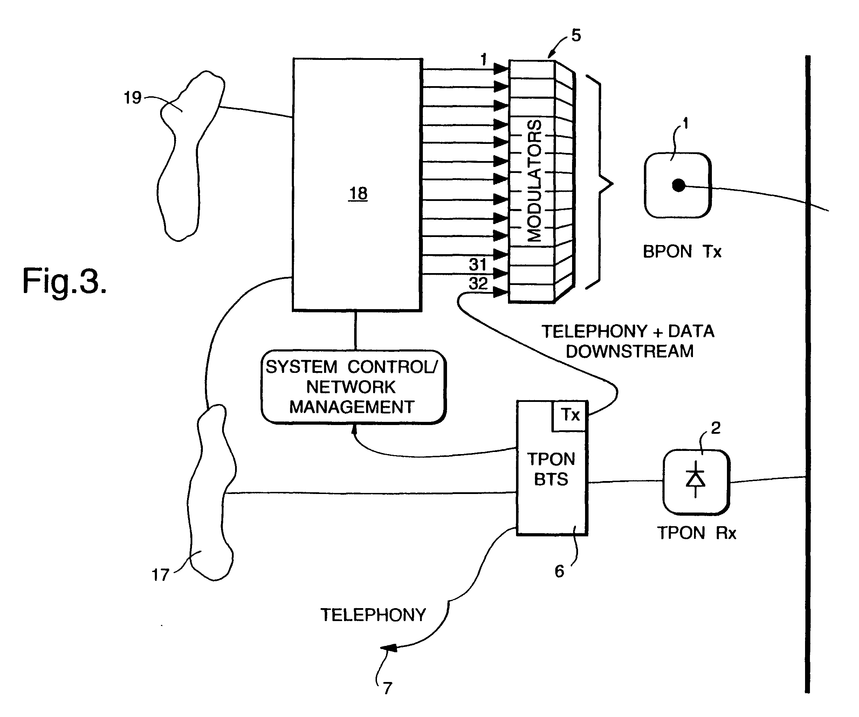

Figure 3 shows a modified form of head end for use with either of the systems of Figures 1 and 2. In the modified head end, a switch 18 is positioned between the video server (or video distribution network) 17 and the FM sub-carrier multiplexer 5. A broadcast distribution network 19 is also connected to the switch 18, this network providing up to several hundreds of compressed digital video channels or broadcast television programmes. The modified head end can, therefore, provide customers with broadcast television channels as well as requested video films. The video distribution network 17 and the broadcast distribution network 19 need not be provided in the head end itself, and are preferably connected to the head end via a synchronous digital hierarchy (SDH) or SONET ring.

It will be apparent that the systems described above have a number of advantages compared with known broadband transmission systems. In particular, the use of FM sub-carrier multiplexing has the following advantages, namely:-
1. optical constraints which are similar to those for digital (baseband) modulation;
2. low cost lasers can be used, as linearity requirements are less stringent;
3. a high PON split is possible without optical amplification;
4. the frequency band is compatible with the satellite TV receiver band of 950MHz to 2000MHz;
5. the equipment used is compatible with terrestrial radio systems;
6. very small, low power optical receivers can be used; and
7. as the BPON transmitter 1 is used to transmit the downstream TPON signals, a separate optical TPON transmitter at the head end is not required, and, a separate optical receiver at the ONU is not required, thereby considerably reducing the cost of the optics.

The compatibility with low-cost satellite receivers already in use is particularly important. Thus, the customer ONU 9 could directly replace a satellite dish, in which case it would be connected directly to the set-top receiver (control box 12), and could be powered by that receiver from the supply intended for the low noise block (LNB).

Each of the systems described above is, therefore, capable of delivering advanced interactive broadband services, such as video on demand direct to the home on fibre. The FM-BPON approach described is capable of a high level optical split, and the integration of the TPON technology with this approach provides a powerful interactive capability.

It will be apparent that the system described above could be used to carry other broadband services than video on demand. For example, each of the TPON/BPON systems described could be modified to provide broadcast TV, satellite TV from a central dish, and innovative new dial-up services applications such as telepresence, broadband videoconferencing, virtual reality and video games.

## Claims

1. An optical fibre communications system comprising a head end connected to a plurality of customers by an optical fibre network, the head end comprising a transmitter unit (1) and a receiver unit (2), and each of the customers has an optical network unit (ONU) comprising an optical receiver (10) and a transmitter unit (11), the head end transmitter (1) and receiver units (2) being connected respectively to the receivers (10) and the transmitter units (11) of the customer optical network units (ONU) by at least one passive optical network, said at least one passive optical network constituting the optical fibre network, wherein the head end transmitter unit (1) is constituted by a sub-carrier multiplexer (5) arranged to drive an optical transmitter, the sub-carrier multiplexer (5) having a plurality of input sub-carriers at different frequencies, a further transmitter unit (6) being arranged to provide one of said sub-carriers carrying time division multiplexed interactive signals and the remaining sub-carriers being provided, in use, to carry broadband service signals, wherein each customer transmitter unit (11) includes an optical transmitter and means for multiplexing interactive signals and control signals (13) to drive said optical transmitter unit (1), and wherein the head end includes a system control unit (8) for controlling the transmission of broadband services by the head end transmitter unit (1) in dependence upon the control signals received by the head end receiver unit from the customer transmitter units (11), and wherein upstream transmission is by time division multiple access at baseband.

2. A system as claimed in claim 1, wherein the head end optical transmitter (1) is arranged to operate at a first predetermined wavelength, and each of the customer optical transmitters (1) is arranged to operate at a second predetermined wavelength.

3. A system as claimed in claim 2, wherein the first predetermined wavelength lies in the range of from 1500nm to 1650nm, and the second predetermined wavelength lies in the range from 1260nm to 1360nm.

4. A system as claimed in any one of claims 1 to 3, wherein said at least one passive optical network is constituted by separate first and second simplex passive optical networks, each having an n-way split, the first simplex passive optical network is arranged to connect the head end transmitter unit (1) to the receivers (10) of the customer optical network units (ONU), and the second simplex passive optical network is arranged to connect the head end receiver unit (2) to the transmitter units (11) of the customer optical network units (ONU).

5. A system as claimed in any one of claims 1 to 3, wherein said at least one passive optical network is constituted by a duplex passive optical network having an n-way split.

6. A system as claimed in claim 5 when appendant to claim 2, wherein the head end transmitter unit (1) and the head end receiver unit (2) are connected to the duplex passive optical network via a wave division multiplexer, and the receiver (10) and transmitter unit (11) of each customer are connected to the duplex passive optical network via a respective wave division multiplexer.

7. A system as claimed in any one of claims 1 to 6, further comprising a video server for supplying video film signal information to the sub-carriers carrying broadband service signals.

8. A system as claimed in claim 7, further comprising a switch for controlling the supply of video film signal information from the video server to the sub-carriers carrying broadband service signals.

9. A system as claimed in claim 8, further comprising a broadcast distribution network for supplying broadcast television channels to the sub-carriers carrying broadband service signals via said switch.

10. A system as claimed in claim 9, wherein the broadcast distribution network and the video server are connected to the switch by a synchronous digital hierarchy ring.

11. A system as claimed in any one of claims 7 to 10, wherein a respective receiver/tuner unit is associated with the receiver (10) of each of the customer optical network units, the receiver/tuner units being arranged to convert received video film signal information into a form suitable for reception by a television apparatus (12).

12. A system as claimed in any one of claims 1 to 11, wherein the interactive signals are digitally phase modulated onto said one sub-carrier.

13. A system as claimed in any one of claims 1 to 12, wherein the broadband service signals are frequency modulated onto said remaining sub-carriers.

14. A system as claimed in any one of claims 1 to 12, wherein the broadband service signals are digitally phase modulated onto said remaining sub-carriers.

15. A system as claimed in claim 12 or claim 14, wherein QPSK is used for digitally phase modulating signals onto said sub-carrier(s).

16. A system as claimed in any one of claims 1 to 15, wherein the further transmitter unit is a TPON head-end transmitter.

17. A system as claimed in claim 16, wherein the TPON head-end transmitter is a Bit Transport System transmitter.

18. A system as claimed in claim 17, wherein the Bit Transport System transmitter is arranged to bit interleave a plurality of traffic data streams.

## Patentansprüche

1. Lichtleitfaser-Kommunikationssystem, das ein Kopfende umfaßt, das über ein Lichtleitfasernetz mit mehreren Kunden verbunden ist, wobei das Kopfende eine Sendereinheit (1) und eine Empfängereinheit (2) umfaßt und wobei jeder der Kunden eine Lichtnetzeinheit (ONU) besitzt, die einen Lichtempfänger (10) und eine Sendereinheit (11) umfaßt, wobei der Kopfende-Sender (1) und die Empfängereinheiten (2) mit den Empfängern (10) bzw. den Sendereinheiten (11) der Kunden-Lichtnetzeinheiten (ONU) über wenigstens ein passives Lichtnetz verbunden sind, wobei das wenigstens eine passive Lichtnetz das Lichtleitfasernetz bildet, wobei die Kopfende-Sendereinheit (1) durch einen Unterträger-Multiplexer (5) gebildet ist, der so beschaffen ist, daß er einen Lichtsender ansteuert, wobei der Unterträger-Multiplexer (5) mehrere Eingangsunterträger bei unterschiedlichen Frequenzen besitzt, wobei eine weitere Sendereinheit (6) so beschaffen ist, daß sie einen der Unterträger schafft, der interaktive Zeitmultiplexsignale trägt, während die verbleibenden Unterträger im Gebrauch dazu vorgesehen sind, Breitbanddienstsignale zu transportieren, wobei jede Kunden-Sendereinheit (11) einen Lichtsender und Mittel zum Multiplexieren von interaktiven Signalen und Steuersignalen (13) enthält, um die Lichtsendereinheit (1) anzusteuern, und wobei das Kopfende eine Systemsteuereinheit (8) enthält, die die Übertragung der Breitbanddienste durch die Kopfende-Sendereinheit (1) in Abhängigkeit von den Steuersignalen, die von der Kopfende-Empfängereinheit von den Kunden-Sendereinheiten (11) empfangen werden, steuert, und wobei eine Aufwärtsübertragung durch Vielfachzugriff im Zeitmultiplex im Grundband erfolgt.

2. System nach Anspruch 1, bei dem der Kopfende-Lichtsender (1) so beschaffen ist, daß er bei einer ersten vorgegebenen Wellenlänge arbeitet, und jeder der Kunden-Lichtsender (11) so beschaffen ist, daß er bei einer zweiten vorgegebenen Wellenlänge arbeitet.

3. System nach Anspruch 2, bei dem die erste vorgegebene Wellenlänge im Bereich von 1500 nm bis 1650 nm liegt und die zweite vorgegebene Wellenlänge im Bereich von 1260 nm bis 1360 nm liegt.

4. System nach einem der Ansprüche 1 bis 3, bei dem das wenigstens eine passive Lichtnetz durch getrennte erste und zweite passive Simplex-Lichtnetze gebildet ist, wovon jedes eine n-Wegsplittung aufweist, wobei das erste passive Simplex-Lichtnetz so beschaffen ist, daß es die Kopfende-Sendereinheit (1) mit den Empfängern (10) der Kunden-Lichtnetzeinheiten (ONU) verbindet, und das zweite passive Simplex-Lichtnetz so beschaffen ist, daß es die Kopfende-Empfangereinheit (2) mit den Sendereinheiten (11) der Kunden-Lichtnetzeinheiten (ONU) verbindet.

5. System nach einem der Ansprüche 1 bis 3, bei dem das wenigstens eine passive Lichtnetz durch ein passives Duplex-Lichtnetz, das eine n-Wegsplittung besitzt, gebildet ist.

6. System nach Anspruch 5, wenn abhängig von Anspruch 2, bei dem die Kopfende-Sendereinheit (1) und die Kopfende-Empfängereinheit (2) mit dem passiven Duplex-Lichtnetz über einen Wellenteilungsmultiplexer verbunden sind und der Empfänger (10) und die Sendereinheit (11) jedes Kunden mit dem passiven Duplex-Lichtnetz über einen entsprechenden Wellenteilungsmultiplexer verbunden sind.

7. System nach einem der Ansprüche 1 bis 6, das ferner einen Video-Server umfaßt, der Videofilmsignal-Informationen an die Breitbanddienstsignale transportierenden Unterträger liefert.

8. System nach Anspruch 7, das ferner eine Vermittlung umfaßt, die die Lieferung von Videofilmsignal-Informationen vom Video-Server an die Breitbanddienstsignale transportierenden Unterträger steuert.

9. System nach Anspruch 8, das ferner ein Rundfunkverteilungsnetz umfaßt, das über die Vermittlung Fernsehkanäle an die Breitbanddienstsignale transportierenden Unterträger liefert.

10. System nach Anspruch 9, bei dem das Rundfunkverteilungsnetz und der Video-Server mit der Vermittlung über einen synchronen digitalen hierarchischen Ring verbunden sind.

11. System nach einem der Ansprüche 7 bis 10, bei dem dem Empfänger (10) jeder der Kunden-Lichtnetzeinheiten eine entsprechende Empfänger/Tuner-Einheit zugeordnet ist, die Empfänger/Tuner-Einheiten so beschaffen sind, daß sie empfangene Videosignal-Informationen in eine Form umsetzen, die von einem Fernsehgerät (12) empfangen werden kann.

12. System nach einem der Ansprüche 1 bis 11, bei dem die interaktiven Signale auf den einen Unterträger digital phasenmoduliert werden.

13. System nach einem der Ansprüche 1 bis 12, bei dem die Breitbanddienstsignale auf die übrigen Unterträger frequenzmoduliert werden.

14. System nach einem der Ansprüche 1 bis 12, bei dem die Breitbanddienstsignale auf die verbleibenden Unterträger digital phasenmoduliert werden.

15. System nach Anspruch 12 oder Anspruch 14, bei dem für die Signale, die auf den bzw. die Unterträger digital phasenmoduliert werden, QPSK verwendet wird.

16. System nach einem der Ansprüche 1 bis 15, bei dem die weitere Sendereinheit ein TPON-Kopfende-Sender ist.

17. System nach Anspruch 16, bei dem der TPON-Kopfende-Sender ein Bittransportsystem-Sender ist.

18. System nach Anspruch 17, bei dem der Bittransportsystem-Sender so beschaffen ist, daß er für mehrere Verkehrsdatenströme eine Bitverschachtelung ausführt.

## Revendications

1. Système de communications à fibre optique comprenant une tête de réseau reliée à un certain nombre d'usagers par un réseau à fibre optique, la tête de réseau comprenant une unité d'émetteur (1) et une unité de récepteur (2) et chacun des usagers possède une unité de réseau optique (ONU) comprenant un récepteur optique (10) et une unité d'émetteur (11), l'émetteur de tête de réseau (1) et les unités de récepteurs (2) étant reliés respectivement aux récepteurs (10) et aux unités d'émetteurs (11) des unités de réseau optique des usagers (ONU) par au moins un réseau optique passif, ledit au moins un réseau optique passif constituant le réseau à fibre optique, dans lequel l'unité d'émetteur de tête de réseau (1) est constituée d'un multiplexeur de sous-porteuses (5) agencé pour attaquer un émetteur optique, le multiplexeur de sous-porteuses (5) comportant un certain nombre de sous-porteuses en entrée à des fréquences différentes, une autre unité d'émetteur (6) qui est agencée pour fournir l'une desdites sous-porteuses transportant des signaux interactifs multiplexés par répartition dans le temps et les sous-porteuses restantes étant prévues, en utilisation, pour transporter des signaux de services à large bande, dans lequel chaque unité d'émetteur d'usager (11) comprend un émetteur optique et un moyen destiné à multiplexer des signaux interactifs et des signaux de commande (13) pour attaquer ladite unité d'émetteur optique (1), et dans lequel la tête de réseau comprend une unité de commande de système (8) destinée à commander l'émission de services à large bandes par l'unité d'émetteur de tête de réseau (1) suivant les signaux de commande reçus par l'unité de récepteur de tête de réseau, depuis les unités d'émetteurs des usagers (11) et dans lequel l'émission amont se fait par un accès multiple par répartition dans le temps en bande de base.

2. Système selon la revendication 1, dans lequel l'émetteur optique de tête de réseau (1) est agencé pour fonctionner à une première longueur d'onde prédéterminée, et chacun des émetteurs optiques des usagers (11) est agencé pour fonctionner à une seconde longueur d'onde prédéterminée.

3. Système selon la revendication 2, dans lequel la première longueur d'onde prédéterminée est située dans la plage de 1 500 nm à 1 650 nm, et la seconde longueur d'onde prédéterminée est située dans la plage de 1 260 nm à 1 360 nm.

4. Système selon l'une quelconque des revendications 1 à 3, dans lequel ledit au moins un réseau optique passif est constitué de premier et second réseaux optique séparés passifs en simplex, comportant chacun un séparateur à n voies, le premier réseau optique passif en simplex est agencé pour relier l'unité d'émetteur de tête de réseau (1) aux récepteurs (10) des unités de réseau optique des usagers (ONU), et le second réseau optique passif en simplex est agencé pour relier l'unité de récepteur de tête de réseau (2) aux unités d'émetteurs (11) des unités de réseau optique des usagers (ONU).

5. Système selon l'une quelconque des revendications 1 à 3, dans lequel ledit au moins un réseau optique passif est constitué d'un réseau optique passif en duplex comportant un séparateur à n voies.

6. Système selon la revendication 5 lorsqu'elle dépend de la revendication 2, dans lequel l'unité d'émetteur de tête. de réseau (1) et l'unité de récepteur de tête de réseau (2) sont reliées au réseau optique passif en duplex par l'intermédiaire d'un multiplexeur par répartition en longueur d'onde et les unités de récepteur (10) et d'émetteur (11) de chaque usager sont reliées au réseau optique passif en duplex par l'intermédiaire d'un multiplexeur par répartition en longueur d'onde respectif.

7. Système selon l'une quelconque des revendications 1 à 6, comprenant en outre un serveur vidéo destiné à fournir des informations de signaux de films vidéo aux sous-porteuses transportant des signaux de services à large bande.

8. Système selon la revendication 7, comprenant en outre un commutateur destiné à commander la fourniture d'informations de signaux de films vidéo depuis le serveur vidéo aux sous-porteuses transportant des signaux de services à large bande.

9. Système selon la revendication 8, comprenant en outre un réseau de distribution de télédiffusion destiné à fournir des canaux de télévision de télédiffusion aux sous-porteuses transportant des signaux de services à large bande par l'intermédiaire dudit commutateur.

10. Système selon la revendication 9, dans lequel le réseau de distribution de télédiffusion et le serveur vidéo sont reliés au commutateur par un anneau à hiérarchie numérique synchrone.

11. Système selon l'une quelconque des revendications 7 à 10, dans lequel une unité de récepteur/syntoniseur respective est associée au récepteur (10) de chacune des unités de réseau optique des usagers, les unités de récepteur/syntoniseur étant agencées pour convertir des informations de signaux de films vidéo reçues sous une forme appropriée à la réception par un appareil de télévision (12).

12. Système selon l'une quelconque des revendications 1 à 11, dans lequel les signaux interactifs sont numériquement modulés en phase sur ladite une sous-porteuse.

13. Système selon l'une quelconque des revendications 1 à 12, dans lequel les signaux de services à large bande sont modulés en fréquence sur lesdites sous-porteuses restantes.

14. Système selon l'une quelconque des revendications 1 à 12, dans lequel les signaux de services à large bande sont numériquement modulés en phase sur lesdites sous-porteuses restantes.

15. Système selon la revendication 12 ou la revendication 14, dans lequel une modulation QPSK est utilisée pour moduler numériquement en phase des signaux sur la ou lesdites sous-porteuses.

16. Système selon l'une quelconque des revendications 1 à 15, dans lequel l'autre unité d'émetteur est un émetteur de tête de réseau de type TPON.

17. Système selon la revendication 16, dans lequel l'émetteur de tête de réseau de type TPON est un émetteur de système de transport binaire.

18. Système selon la revendication 17, dans lequel l'émetteur du système de transport binaire est agencé pour entrelacer les bits sur un certain nombre de flux de données de trafic.
